# EUROPEAN PATENT SPECIFICATION

(11) **EP 4 422 353 B1**
(45) Date of publication and mention of the grant of the patent: **02.12.2026**
(21) Application number: 24159693.1
(22) Date of filing: 26.02.2024
(51) Int. Cl.: H05B 47/115, H05B 47/14

(54) **SPACE LIGHTING SYSTEM BASED ON ENERGY-SAVING TARGET**
RAUMBELEUCHTUNGSSYSTEM AUF BASIS EINES ENERGIESPARENDEN ZIELS
SYSTÈME D'ÉCLAIRAGE SPATIAL BASÉ SUR UNE CIBLE À ÉCONOMIE D'ÉNERGIE

(30) Priority: 26.02.2023 CN 202310208683
(43) Date of publication of application: 28.08.2024
(73) Proprietor: Self Electronics Co., Ltd., Ningbo City, Zhejiang 315103 (CN); SELF ELECTRONICS Germany GmbH, 51149 Köln (DE); Lin, Wanjiong, Ningbo City, Zhejiang 315103 (CN)
(72) Inventor: LIN, Wanjiong, Ningbo, 315103 (CN); ZHANG, Jian, Ningbo, 315103 (CN); PAN, Huangfeng, Ningbo, 315103 (CN); WANG, Linji, Ningbo, 315103 (CN); LI, Hong, Ningbo, 315103 (CN)
(74) Representative: 2K Patent Partnerschaft mbB

(56) References cited:
- EP-A1- 3 972 391
- US-B1- 9 538 626

## Description

This present application claims priority of Chinese patent application no. CN202310208683.9 filed on Feb. 26, 2023.

### Field of Invention

The invention relates to the technical field of lighting technology, in particular to a space lighting system based on energy-saving target.

### Background of Invention

Due to the escalation of global environmental problems and energy crisis, the demand for energy saving and low-carbon in lighting system is growing. One of the existing lighting system solutions is to use manual switching, which is time-consuming and ineffective; and another one is to use a timing method, based on experience value, with fixed period adjustment, which is inflexible and ineffective. What's more, cameras and other types of image acquisition devices are used to identify and judge the flow of people in the lighting space, and excessive collection of biological information will bring about adverse consequences such as personal privacy leakage.

US 9 538 626 B1 discloses a lighting control system comprising a smart device, at least one luminaire assembly, and a server. A user operates a client app installed on the smart device to communicatively with the server to further control the at least one luminaire assembly. The server comprises a database module, a brightness control module for implementing automatic brightness variations, a mode switching module for cooperating with at least sensor disposed in the at least one luminaire assembly to implement different ambient lighting controls, and a brightness compensation module for cooperating with a light sensor disposed on the smart device to implement ambient lighting control. In other words: There is discloses a space lighting system based on energy-saving target, comprising a control device and an execution device, wherein the execution device is one or more luminaires, arranged inside a space; and wherein the control device is adapeted to configure dimming parameters of the execution device according to a passenger density in the space based on the energy-saving target of the space lighting system; wherein the space lighting system also comprises a collector that is adapted to collect a number of people in the space; wherein the collector is connected with the control device or embedded in the control device.

EP 3 972 391 A1 discloses a lighting system (100, 100') comprising a plurality of luminaires (120) arranged for illuminating one or more spaces and a plurality of sensor units (140), each including respective one or more sensors arranged to observe respective environmental characteristics in their respective locations in said one or more spaces and an apparatus (102, 103) comprising means for performing the following: carry out a learning procedure to define a model of one or more aspects of environmental conditions in a portion of said one or more spaces based on respective time portions of a respective plurality of time series of sensor values originating from a first plurality of said sensors; evaluate, for each of said first plurality of said sensors, a respective strength of a match between the time series of sensor values originating from the respective sensor and said model; select a second plurality of said sensors as a subset of the first plurality of said sensors based at least in part on the respective strengths of the matches between the time series of sensor values and the model; and apply said model to control one or more aspects of a building automation system based on the respective plurality of time series of sensor values received from the second plurality of said sensors after said time portion.

### Summary of Invention

In view of this, it is necessary to provide a space lighting system based on energy-saving target to meet the requirements of safety as well as energy saving and low carbon to overcome the above deficiencies.

To achieve the above object, the present invention provides a space lighting system comprising the features of claim 1. Accordingly, the space lighting system comprises a control device and an execution device, the execution device is one or more luminaires and arranged inside the space; the control device configures the dimming parameters of the execution device according to the passenger density in the space based on the energy-saving target of the space lighting system. The space lighting system provided by the present invention also comprises a collector that collects the number of people in the space; the collector is connected with the control device or embedded in the control device. In this way, by embedding or connecting externally with the control device, the collector can collect the number of people in the space, which is convenient to quantify the flow of people in the space, and more reasonably to adjust the dimming settings.

The invention is characterized in that the control device obtains and records the number of people collected by the collector at regular intervals in accordance with a collection period, records the actual energy-saving results of the system, stores historical data in n rolling periods each time, in which n ≥ 1, and automatically overwrites the historical data of the 1st rolling period with the historical data of the n+1th rolling period, and so on iteratively updates the historical data stored by the control device. In this way, the number of people in the space collected by the collector, i.e. the flow of people in the space, is recorded periodically. By setting the rolling period, the historical data is strongly correlated with the latest data. The invention is further characterized in that the control device performs AI learning according to historical data stored by the system to set current dimming parameters. In this way, without additional manual input, the system can self-learn to set the latest dimming parameters by matching a compatible AI learning model with the historical data stored by the system.

In addition or alternatively, the control device determines an energy-saving dimming scheme for the next period based on the difference between the cumulative energy saving of the system and the target energy saving with reference to the flow of people in n rolling periods. Similarly, without additional manual input, the system performs automated deduction with reference to the periodical historical data and continuously self-corrects to determine the energy-saving dimming scheme for the next period.

Preferred embodiments are defined by optional features as follows:
Optionally, the space lighting system provided by the present invention also includes a human-computer interaction terminal; the human-computer interaction terminal is connected with the control device or embedded in the control device. The energy-saving target is entered by the human-computer interaction terminal and sent to the control device. In addition, the human-computer interaction terminal is configured with a touch display or buttons for data and information entry. In this way, by setting the human-computer interaction terminal, it is convenient to check the number of people in the space and the dimming parameters, as well as to enter the energy-saving targets, etc.

Optionally, the control device is connected with an external network, and the external network can connect to a plurality of the control devices; the external network can send energy-saving target to the control device, or the control device matches and obtains the energy-saving target by means of the system parameters entered through the matching relationship between the system parameters and the energy-saving target preset in the external network. In this way, centralized management of multiple different local end space lighting systems can be achieved.

Optionally, the collector is arranged at the entrance of the space to record the number of people entering the space during each collection period; or the collector is arranged at both the entrance of the space and at the exit of the space to record the number of people entering and exiting the space during each collection period, respectively. This facilitates the accuracy of the actual number of people staying in the space and the realization of better matched dimming settings.

Optionally, the dimming parameter includes dimming brightness and/or dimming ratio, and the energy-saving target includes energy-saving ratio and/or an energy-saving value.

Optionally, the space in a supermarket, a shopping mall, a store or a museum. Applying the space lighting system provided by the present invention in such spatial environments ensures that it a higher degree of scene matching, and the dimming judgment is more accurate, thus ensuring a better dimming effect.

### Technical effects of the present invention

Compared with the prior art, the present invention provides a system that adjusts the dimming parameters of the luminaires according to the density of the passenger flow in the space on the premise that there is a requirement for an energy-saving target. In particular, a corresponding collector is set according to the specific space to obtain the number of people in the space, and the system's historical data is updated on a rolling basis, and then combined with the system's AI learning and self-adaptation, to realize intelligent control of the dimming parameters of the lighting system, optimize the dimming effect, and enhance the customer experience.

### Overview on drawings

Hereinafter, the invention will be disclosed with reference to the drawings and exemplary embodiments, from which further features, technical effects and problems to be solved will become apparent. In the drawings:

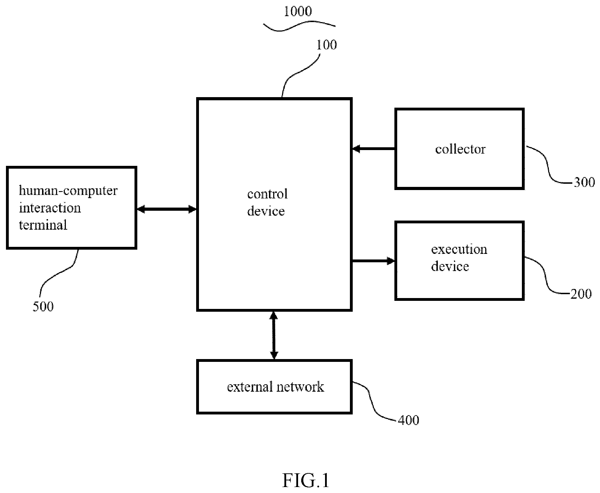

- Fig. 1: is a schematic structural diagram of an embodiment of a space lighting system involved in the present invention.

Throughout the drawings, like reference numerals designated identical or substantially equivalent elements or groups of elements.

### Detailed description of preferred embodiments

Specific embodiments of the present invention will be further described in detail below based on the accompanying drawings. It should be understood that the descriptions of the embodiments of the present invention herein are not intended to limit the protection scope of the present invention.

The present invention relates to the application of a space lighting system, hereinafter referred to as the system 1000, based on the energy-saving target, wherein the space refers to an indoor space that can carry a certain amount of passenger flow, such as a viewing arena, a supermarket, a shopping mall, a store, a museum of literature, and the like. It is understandable that the behavioral activities of people in such specific spaces have certain regularity and repeatability. More specifically, for example, a large supermarket has its own pattern of passenger flow in various time period every day of week. And it is very likely that after work the passenger flow is significantly higher than that during working hours, and the passenger flow on the weekend is significantly higher than that on the weekday. The space lighting system provided by the present invention is based on the premise of the objective existence of such sociological regularity.

FIG. 1 is an embodiment of the space lighting system provided by the present invention applied in a supermarket. In such supermarket we can understand that the area of the specific supermarket is actually relatively fixed. Based on the specific geographic location of the supermarket and the like, combined with hot spot analysis of big data, it can be preliminarily considered that the consumption habits of the crowd under such model, or their stay time, are also relatively fixed. In this embodiment, the system 1000 comprises a control device 100 and an execution device 200, wherein the execution device 200 refers to one or more luminaires, and the control device 100 can be a device for control use such as a PLC, a CPU, and a microcontroller, and specifically in this embodiment, the control device is a central processing unit CPU as an example. In such system 1000, as the energy-saving target has been defined, the control device 100 can configures the dimming parameters of the execution device 200 according to the passenger density in the space, where the dimming parameter can include but not limited to dimming brightness and dimming ratio, etc., and the energy-saving target can include but not limited to an energy-saving ratio and an energy-saving value, etc. And the energy-saving target paraphrase is equivalent to the target energy-saving.

The system 1000 further comprises a collector 300. The collector 300 is connected to or embedded in the control device 100. And the control device 100 can read to the collector 300 the number of people in the space that the collector 300 has collected. The collector 300 herein can be set either at the entrance of the space to record the number of people entering the space during each collection period; or it can be set at the entrance and exit of the space respectively to record the number of people entering and exiting the space during each collection period. With this setting, the number of people in the space, especially the number of people staying in the space, is more accurately captured. The collection period here can be as short as possible, depending mainly on the response time of the collector 300.

The collector 300 can be selected as a sensor, specifically a microwave sensor, an ultrasonic sensor, etc., and in this embodiment, an ultrasonic sensor is preferred in consideration of the accuracy and safety of the collected data.

The system 1000 also includes a human-computer interaction terminal 500 that is connected with, or embedded in, the control device 100. In addition, the human-computer interaction terminal 500 has a touch display or buttons for data and information entry. Specifically, the human-computer interaction terminal 500 herein can be a mobile phone, a tablet, or other interactive devices. The administrator can enter the energy-saving target via the human-computer interaction terminal 500 and communicated it to the control device 100.

The system 1000 further includes an external network 400. The external network 400 can connect a plurality of the control devices 100. Through the external network 400 energy-saving targets can be sent to all the control devices, realizing unified management and control by administrators. In another way, the control device 100 matches and obtains the energy-saving target by means of the system parameters entered through the matching relationship between the system parameters and the energy-saving target preset in the external network 400.

Briefly, the system 1000 of this embodiment comprises a control device 100, an external network 400, a human-computer interaction terminal 500 and a plurality of luminaires 200 arranged in a space and at least one collector 300 provided at the entrance of the space. In this embodiment, the plurality of luminaires are ceiling lamps dispersedly arranged within a shopping area within a supermarket.

The collector 300 collects the number of people entering the space, and then accumulates and records it. The control device 100 reads the number of people entering the space from the collector 300, and after each reading, the collector 300 automatically resets and begins counting again. The data read from the collector 300 according to the period and the actual energy-saving results of the system 1000, is stored by the control device 100 as historical data according to n rolling periods each time, in which n ≥ 1, and automatically overwrites the historical data of the 1st rolling period with the historical data of the n+1th rolling period, and so on iteratively updates the historical data stored by the control device 100.

The data on the number of people in the space collected by the collector 300 is recorded periodically, and by setting the rolling period, it is ensured that the historical data is strongly correlated with the latest data. With such historical data basis, the control device performs AI learning to set the current dimming parameters according to the historical data stored by the system. In this way, without additional manual input, the system can self-learn to set the latest dimming parameters by matching a compatible AI learning model with the historical data stored by the system.

The control device can also determine an energy saving dimming scheme for the next period based on the difference between the cumulative energy saving of the system and the target energy saving with reference to the flow of people in n rolling periods. Similarly, without additional manual input, the system performs automated deduction with reference to the periodical historical data and continuously self-corrects to determine the energy-saving dimming scheme for the next period

In addition, the target energy-saving ratio can be set on the display screen of human-computer interaction terminal 500. And the number of people currently staying in the space as well as the dimming brightness value will be displayed in real time and plotted.

In summary, the present invention discloses a space lighting system based on energy-saving target, comprising a control device and an execution device. The execution device is one or more luminaires arranged inside the space; the control device configures the dimming parameters of the execution device according to the passenger density in the space based on the energy-saving target of the space lighting system. The present invention can realize the purpose of optimizing the dimming effect according to the passenger flow density under the constraint of setting conditions based on the energy-saving target so as to improve the customer experience.

The above are only preferred embodiments of the present invention, and are not intended to limit the protection scope of the present invention.

## Claims

1. A space lighting system based on energy-saving target, comprising a control device (100) and an execution device (200), wherein:
the execution device (200) is one or more luminaires, arranged inside a space;
the control device (100) is adapted to configure dimming parameters of the execution device (200) according to a passenger density in the space based on the energy-saving target of the space lighting system (1000);
the space lighting system also comprises a collector (300) that is adapted to collect a number of people in the space;
the collector (300) is connected with the control device (100) or embedded in the control device (100);
**characterized in that**
the control device (100) is adapted to obtain and record the number of people collected by the collector (300) at regular intervals in accordance with a collection period, is adapted to record the actual energy-saving results of the system, to store the data read from the collector according to the period and the actual energy saving results as historical data in n rolling periods each time, in which n ≥ 1, and to automatically overwrite the historical data of the 1st rolling period with the historical data of the n+1th rolling period, and is adapted to iteratively update the historical data stored by the control device (100), and
the control device (100) is adapted to perform Artificial Intelligence, AI, learning according to the historical data stored by the system to set current dimming parameters and/or
the control device (100) is adapted to determine an energy-saving dimming scheme for a next period based on the difference between the cumulative energy saving of the system and the target energy saving with reference to the flow of people in n rolling periods.

2. The space lighting system based on energy-saving target as claimed in claim 1, **characterized in that**,
it also includes a human-computer interaction terminal (500);
the human-computer interaction terminal (500) is connected with the control device (100) or embedded in the control device (100).

3. The space lighting system based on energy-saving target as claimed in any one of claims 1-2, **characterized in that**,
the control device (100) is adapted to be connected to an external network (400) connected to a plurality of further control devices (100) identical in construction and to receive the energy-saving target from the external network, or
the control device (100) is adapted to match and obtain the energy-saving target by means of the system parameters entered through the matching relationship between the system parameters and the energy-saving target preset in an external network (400).

4. The space lighting system based on energy-saving target as claimed in claim 2, **characterized in that**,
the energy-saving target is sent to the control device (100) after being entered into the human-computer interaction terminal (500).

5. The space lighting system based on energy-saving target as claimed in claim 1, **characterized in that**,
the collector (300) is arranged at an entrance of the space to record the number of people entering the space during the collection period; or the collector (300) is arranged at both the entrance of the space and at the exit of the space to record the number of people entering and exiting the space during the collection period, respectively.

6. The space lighting system based on energy-saving target as claimed in claim 2, **characterized in that**,
the human-computer interaction terminal (500) is configured with a touch display or buttons for data and information entry.

7. The space lighting system based on energy-saving target as claimed in any one of claims 1-6, **characterized in that**,
the dimming parameter includes dimming brightness and/or dimming ratio, and the energy-saving target includes energy-saving ratio and/or an energy-saving value.

8. The space lighting system based on energy-saving target as claimed in any one of claims 1-7, **characterized in that**,
the space in a supermarket, a shopping mall, a store or a museum.

## Patentansprüche

1. Raumbeleuchtungssystem, das auf dem Ziel der Energieeinsparung basiert und eine Steuervorrichtung (100) sowie eine Ausführungsvorrichtung (200) umfasst, wobei:
die Ausführungsvorrichtung (200) aus einer oder mehreren Leuchten besteht, die innerhalb eines Raums angeordnet sind;
die Steuervorrichtung (100) dazu ausgelegt ist, Dimmparameter der Ausführungsvorrichtung (200) entsprechend einer Personendichte in dem Raum auf der Grundlage des Energiesparziels des Raumbeleuchtungssystems (1000) zu konfigurieren;
das Raumbeleuchtungssystem außerdem einen Sensor (300) umfasst, der dazu ausgelegt ist, die Anzahl der Personen im Raum zu erfassen;
der Erfassungssensor (300) mit der Steuervorrichtung (100) verbunden oder in die Steuervorrichtung (100) integriert ist;
**dadurch gekennzeichnet, dass**
die Steuervorrichtung (100), die dazu ausgelegt ist, die vom Erfassungsgerät (300) erfasste Anzahl von Personen in regelmäßigen Abständen gemäß einem Erfassungszeitraum zu ermitteln und aufzuzeichnen, dazu ausgelegt ist, die tatsächlichen Energiespareffekte des Systems aufzuzeichnen, die von dem Erfassungsgerät gelesenen Daten entsprechend dem Zeitraum und den tatsächlichen Energiespareffekten jeweils als historische Daten in n rollierenden Zeiträumen zu speichern, wobei n ≥ 1 ist, und dazu ausgelegt ist, die historischen Daten des 1ten rollierenden Zeitraums automatisch mit den historischen Daten des n+1. rollierenden Zeitraums zu überschreiben, sowie dazu ausgelegt ist, die von der Steuervorrichtung (100) gespeicherten historischen Daten iterativ zu aktualisieren, und
die Steuervorrichtung (100) dazu ausgelegt ist, auf der Grundlage der von dem System gespeicherten historischen Daten ein maschinelles Lernen (Artificial Intelligence, AI) durchzuführen, um aktuelle Dimmparameter festzulegen und/oder
die Steuervorrichtung (100) dazu ausgelegt ist, ein energiesparendes Dimmschema für einen nächsten Zeitraum auf der Grundlage der Differenz zwischen der kumulativen Energieeinsparung des Systems und der angestrebten Energieeinsparung unter Berücksichtigung des Personenstroms in n rollierenden Zeiträumen zu bestimmen.

2. Raumbeleuchtungssystem, das auf dem Ziel der Energieeinsparung basiert, nach Anspruch 1, **dadurch gekennzeichnet, dass** es außerdem ein Mensch-Computer-Interaktionsterminal (500) umfasst;
das Mensch-Computer-Interaktionsterminal (500) mit der Steuervorrichtung (100) verbunden oder in die Steuervorrichtung (100) integriert ist.

3. Raumbeleuchtungssystem, das auf dem Ziel der Energieeinsparung basiert, nach einem der Ansprüche 1-2, **dadurch gekennzeichnet, dass** die Steuervorrichtung (100) dazu ausgelegt ist, mit einem externen Netzwerk (400) verbunden zu werden, das mit einer Vielzahl weiterer, baugleicher Steuervorrichtungen (100) verbunden ist, und das Energiesparziel von einem externen Netzwerk (400) zu empfangen, oder
die Steuervorrichtung (100) dazu ausgelegt ist, das Energiesparziel anhand der Systemparameter abzugleichen und zu ermitteln, und zwar mittels der Abgleichbeziehung zwischen den Systemparametern und dem in einem externen Netzwerk (400) voreingestellten Energiesparziel.

4. Raumbeleuchtungssystem, das auf dem Ziel der Energieeinsparung basiert, nach Anspruch 2, **dadurch gekennzeichnet, dass** das Energiesparziel nach der Eingabe in das Mensch-Computer-Interaktionsterminal (500) an die Steuervorrichtung (100) gesendet wird.

5. Raumbeleuchtungssystem, das auf dem Ziel der Energieeinsparung basiert, nach Anspruch 1, **dadurch gekennzeichnet, dass** der Erfassungssensor (300) am Eingang des Raums angeordnet ist, um die Anzahl der Personen zu erfassen, die den Raum während des Erfassungszeitraums betreten; oder dass der Erfassungssensor (300) sowohl am Eingang des Raums als auch am Ausgang des Raums angeordnet ist, um jeweils die Anzahl der Personen zu erfassen, die den Raum während des Erfassungszeitraums betreten bzw. verlassen.

6. Raumbeleuchtungssystem, das auf dem Ziel der Energieeinsparung basiert, nach Anspruch 2, **dadurch gekennzeichnet, dass** das Mensch-Computer-Interaktionsterminal (500) mit einem Touchdisplay oder Tasten zur Eingabe von Daten und Informationen ausgestattet ist.

7. Raumbeleuchtungssystem, das auf dem Ziel der Energieeinsparung basiert, nach einem der Ansprüche 1 bis 6, **dadurch gekennzeichnet, dass** der Dimmparameter die Dimmhelligkeit und/oder das Dimmverhältnis umfasst und das Energiesparziel das Energiesparverhältnis und/oder einen Energiesparwert umfasst.

8. Raumbeleuchtungssystem, das auf dem Ziel der Energieeinsparung basiert, nach einem der Ansprüche 1 bis 7, **dadurch gekennzeichnet, dass** es sich bei dem Raum um einen Raum in einem Supermarkt, einem Einkaufszentrum, einem Geschäft oder einem Museum handelt.

## Revendications

1. Système d'éclairage d'une pièce, basé sur une cible à économie d'énergie, comprenant un dispositif de commande (100) et qu'un dispositif d'exécution (200), dans lequel:
le dispositif d'exécution (200) est constitué d'un ou plusieurs luminaires disposés à l'intérieur d'une pièce;
le dispositif de commande (100) est conçu pour configurer les paramètres de gradation du dispositif d'exécution (200) en fonction de la densité de personnes dans la pièce, sur la base de l'objectif d'économie d'énergie du système d'éclairage de pièce (1000);
le système d'éclairage de la pièce comprend en outre un capteur (300) conçu pour détecter le nombre de personnes présentes dans la pièce;
le capteur de détection (300) est relié au dispositif de commande (100) ou intégré à celui-ci;
**caractérisé en ce que**
le dispositif de commande (100), qui est conçu pour déterminer et enregistrer à intervalles réguliers, conformément à une période de détection, le nombre de personnes détecté par le capteur (300), est conçu pour enregistrer les gains énergétiques réels du système, pour stocker les données lues par le dispositif de détection, en fonction de la période et des gains énergétiques réels, sous forme de données historiques dans n périodes glissantes, où n ≥ 1, et est conçu pour écraser automatiquement les données historiques de la 1re période glissante par celles de la n+1e période glissante, ainsi qu'à mettre à jour de manière itérative les données historiques stockées par le dispositif de commande (100), et
le dispositif de commande (100) est conçu pour effectuer un apprentissage automatique (intelligence artificielle, IA) sur la base des données historiques enregistrées par le système, afin de définir des paramètres de gradation actuels et/ou
le dispositif de commande (100) est conçu pour déterminer un schéma de gradation économe en énergie pour une période suivante sur la base de la différence entre l'économie d'énergie cumulée du système et l'économie d'énergie visée, en tenant compte du flux de personnes sur n périodes glissantes.

2. Système d'éclairage de pièce, basé sur l'objectif d'économie d'énergie, selon la revendication 1, **caractérisé en ce qu'**il comprend en outre un terminal d'interaction homme-machine (500);
le terminal d'interaction homme-machine (500) est connecté au dispositif de commande (100) ou intégré à celui-ci.

3. Système d'éclairage de pièce, basé sur l'objectif d'économie d'énergie, selon l'une des revendications 1 à 2, **caractérisé en ce que** le dispositif de commande (100) est conçu pour être connecté à un réseau externe (400) relié à une pluralité d'autres dispositifs de commande (100) de conception identique, et pour recevoir l'objectif d'économie d'énergie depuis un réseau externe (400), ou
le dispositif de commande (100) est conçu pour ajuster et déterminer l'objectif d'économie d'énergie à partir des paramètres du système, et ce au moyen de la relation d'ajustement entre les paramètres du système et l'objectif d'économie d'énergie préréglé dans un réseau externe (400).

4. Système d'éclairage de pièce, basé sur un objectif d'économie d'énergie, selon la revendication 2, **caractérisé en ce que** l'objectif d'économie d'énergie est transmis au dispositif de commande (100) après avoir été saisi dans le terminal d'interaction homme-machine (500).

5. Système d'éclairage de pièce, basé sur un objectif d'économie d'énergie, selon la revendication 1, **caractérisé en ce que** le capteur de détection (300) est disposé à l'entrée de la pièce afin de détecter le nombre de personnes entrant dans la pièce pendant la période de détection; ou **en ce que** le capteur de détection (300) est disposé à la fois à l'entrée et à la sortie de la pièce afin de détecter respectivement le nombre de personnes qui entrent et qui sortent de la pièce pendant la période de détection.

6. Système d'éclairage de pièce, basé sur l'objectif d'économie d'énergie, selon la revendication 2, **caractérisé en ce que** le terminal d'interaction homme-machine (500) est équipé d'un écran tactile ou de touches permettant la saisie de données et d'informations.

7. Système d'éclairage de pièce, basé sur un objectif d'économie d'énergie, selon l'une des revendications 1 à 6, **caractérisé en ce que** le paramètre de gradation comprend la luminosité de gradation et/ou le rapport de gradation, et **en ce que** l'objectif d'économie d'énergie comprend le rapport d'économie d'énergie et/ou une valeur d'économie d'énergie.

8. Système d'éclairage de pièce, basé sur l'objectif d'économie d'énergie, selon l'une des revendications 1 à 7, **caractérisé en ce que** la pièce est une pièce située dans un supermarché, un centre commercial, un magasin ou un musée.
